# EUROPEAN PATENT APPLICATION

(11) **EP 1 814 322 A1**
(43) Date of publication of application: **01.08.2007**
(21) Application number: 05814333.0
(22) Date of filing: 12.12.2005
(51) Int. Cl.: H04N 5/44, H04N 7/173

(54) **TV RECEIVER**

(30) Priority: 13.12.2004 JP 2004359408
(71) Applicant: MATSUSHITA ELECTRIC INDUSTRIAL CO., LTD., Osaka 571-8501 (JP)
(72) Inventor: KODAMA, Seiji, c/o Mats. El. Ind. Co., Ltd., IPROC, Chuo-ku, Osaka-shi, Osaka 540-6319 (KR)
(74) Representative: Pautex Schneider, Nicole Véronique
(86) International application number: PCT/JP2005/022753
(87) International publication number: WO 2006/064752

(57) **Abstract**

A television receiver is provided, which has a measurement section for measuring watching time in which a plurality of image signals inputted from a plurality of image input terminals are displayed as images, and a control section that stops image display of the image signals to be inputted when watching time read from the measurement section passes over watching-allowed time being previously stored. Thus, the plurality of image signals to be inputted are subjected to watching restriction.

## Description

### TECHNICAL FIELD

The present invention relates to a television receiver that can be used for watching TV broadcast from a tuner, in addition, can be connected with external devices such as a game device or video recorder, and relates to a television receiver having a function of restrictingwatching time of images inputted from the tuner or external input terminals.

### BACKGROUND ART

As image signals of images and sounds inputted into a television receiver from an image input terminal, roughly two kinds of image signals are given. One is an image signal as a broadcast signal from TV broadcast or cable broadcast, which is inputted through an RF terminal and outputted by a built-in tuner. The other is an image signal of images and sounds from an external device such as a game or video device, which is inputted through an external input terminal.

In a usual television receiver, watching time of images inputted from an external input terminal connected with a game device is controlled to suppress possibility of failure of eyesight due to watching TV for a long time when children play with the game device. Technical contents of this are disclosed in Japanese Patent Unexamined Publication No. 8-154219. A television receiver, game device, and recording medium for game input, in which watching time is controlled, are disclosed in Japanese Patent Unexamined Publication No. 2000-5448.

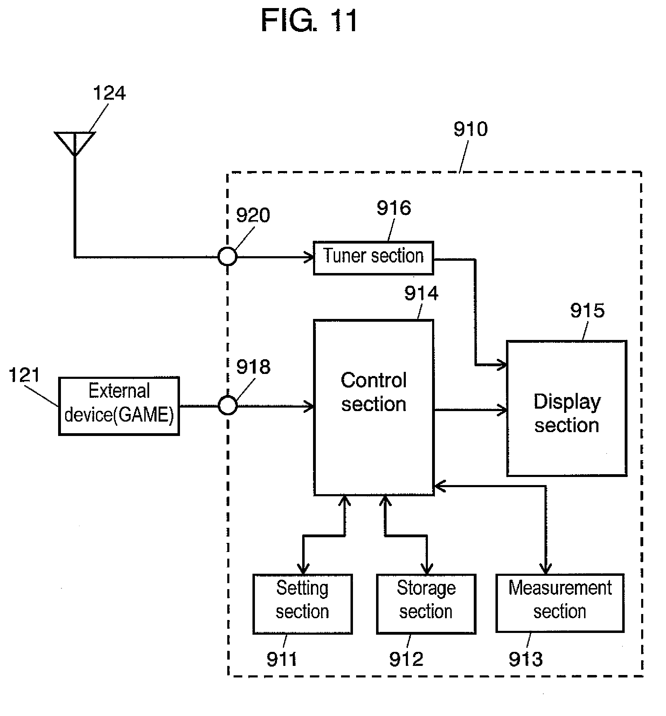

Fig. 11 shows the usual television receiver. In Fig. 11, television receiver 910, which is connected to external device 121 being a game device at external input terminal 918, sets time, watching-allowed time of one external device, and a personal identification number in setting section 911, and stores the time, watching-allowed time of one external device, and personal identification number in storage section 912. When use of the external device is started, watching time is measured by measuring section 913, and when the watching time passes over the watching-allowed time, control section 914 gives a warning to a viewer that has used display section 915, and performs watching restriction by stopping image output.

However, in such a usual configuration, only the game device being one external device is subjected to watching restriction, and when a television receiver, which is connected with a number of external devices at external input terminals is used as in a current case, for example, in the case that the television receiver is connected with the game device, a video recorder, and a DVD recorder, while the game device is controlled in watching time, the video recorder, the DVD recorder, or a tuner is not controlled in watching time, consequently TV has been able to be watched for a long time. Therefore, there has been a problem that children's watching time of TV cannot be decreased except for the game device.

### SUMMARY OF THE INVENTION

The invention is to solve the usual problem, and provides a television receiver in which images from a plurality of external devices and a built-in tuner can be subjected to watching restriction.

The television receiver of the invention has a plurality of image input terminals for inputting image signals, a measurement section for measuring watching time in which the image signals inputted from the plurality of image input terminals are displayed as images, and a control section for stopping output of the image signals inputted from the image input terminals when the watching time read from the measurement section passes over watching-allowed time being previously stored.

According to the configuration, when watching time of each of the images from the plurality of external devices and the built-in tuner passes over the watching-allowed time, each image is stopped, thereby watching time can be controlled for each image.

Moreover, the television receiver of the invention has a setting section that performs authentication for permitting change of setting by inputting a predetermined password to set the watching-allowed time.

According to the television receiver of the invention, in the case that a plurality of external devices such as the game device, video recorder, and DVD recorder are connected to the external input terminals, watching time of only the game device being one external device is controlled, in addition, a plurality of images from the video recorder, DVD recorder, tuner and the like are controlled in watching time, whereby TV watching time for external devices other than the game device can be controlled. Thus, TV watching time of children can be reduced.

### BRIEF DESCRIPTION OF THE DRAWINGS

Fig. 1 is a block diagram showing a configuration of a television receiver according to embodiment 1 of the invention;
Fig. 2 is a flowchart of setting of watching restriction of the television receiver according to the embodiment 1 of the invention;
Fig. 3 is a flowchart in watching the television receiver according to the embodiment 1 of the invention;

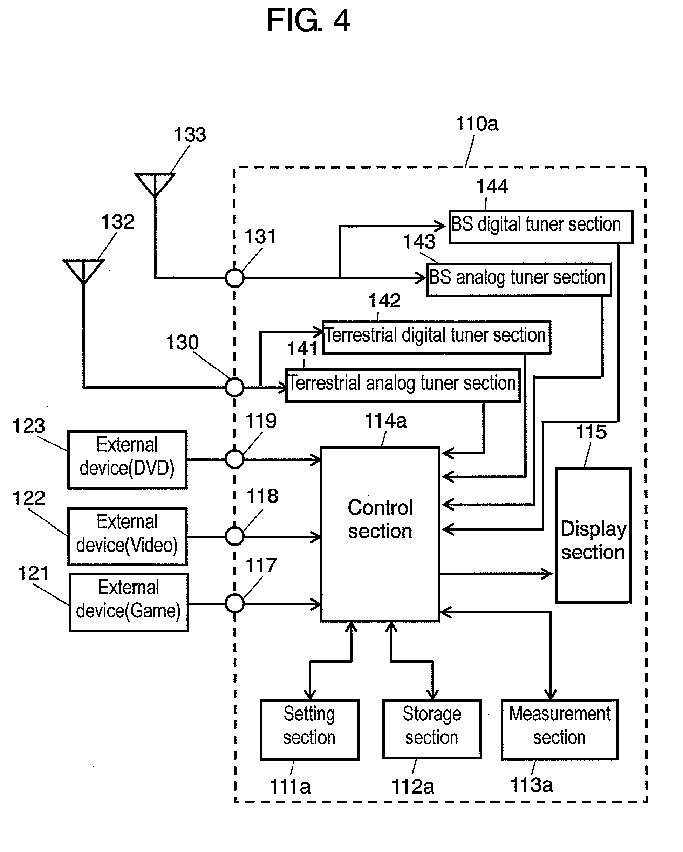

Fig. 4 is another block diagram showing a configuration of a television receiver according to the embodiment 1 of the invention;
Fig. 5 is a block diagram showing a configuration of a television receiver according to embodiment 2 of the invention;
Fig. 6 is a flowchart of setting of watching restriction of the television receiver according to the embodiment 2 of the invention;
Fig. 7 is a flowchart in watching the television receiver according to the embodiment 2 of the invention;
Fig. 8 is a block diagram showing a configuration of a television receiver according to embodiment 3 of the invention;
Fig. 9 is a flowchart of setting of watching restriction of the television receiver according to the embodiment 3 of the invention;
Fig. 10 is a flowchart in watching the television receiver according to the embodiment 3 of the invention; and
Fig. 11 is a block diagram showing a configuration of a television receiver in a usual technique.

### DESCRIPTION OF REFERENCE NUMERALS AND SIGNS

- 110a, 110b, 110c: television receiver
- 111a, 111b, 111c: setting section
- 112a, 112b, 112c: storage section
- 113a, 113b, 113c: measurement section
- 114a, 114b, 114c: control section
- 115: display section
- 116: tuner section
- 117, 118, 119: external input terminal
- 120, 130, 131: RF terminal
- 121: external device (game)
- 122: external device (video)
- 123: external device (DVD)
- 124: antenna
- 132: terrestrial broadcasting antenna
- 133: BS broadcasting antenna
- 141: terrestrial analog tuner section
- 142: terrestrial digital tuner section
- 143: BS analog tuner section
- 144: BS digital tuner section

### PREFERRED EMBODIMENTS FOR CARRYING OUT THE INVENTION

Hereinafter, preferred embodiments for carrying out the invention will be described with reference to drawings.

### Embodiment 1

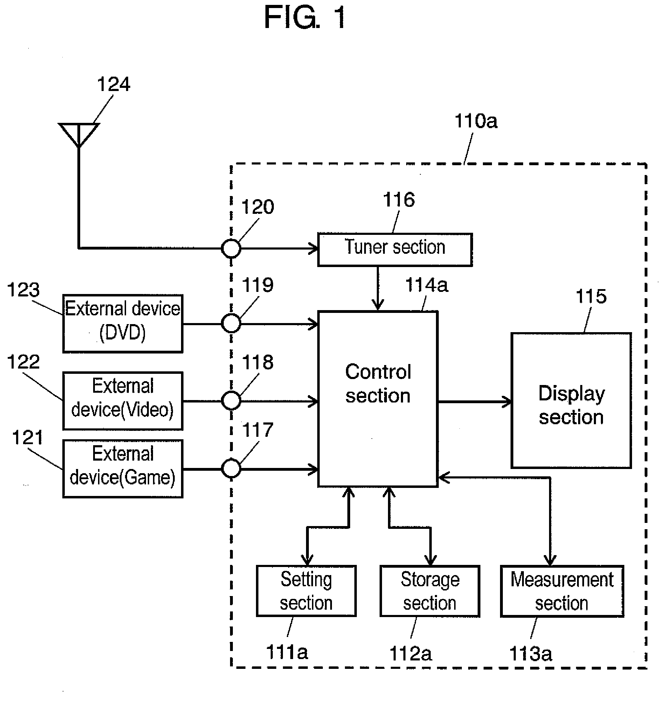

Fig. 1 is a block diagram of a television receiver of embodiment 1 of the invention. In Fig. 1, television receiver 110a includes setting section 111a, storage section 112a, measurement section 113a, control section 114a, display section 115, tuner section 116, external input terminals 117, 118 and 119, and RF terminal 120. External input terminals 117, 118 and 119 are connected with external devices 121, 122 and 123 respectively. RF terminal 120 is connected with antenna 124.

Tuner section 116 is built in television receiver 110a, and receives a broadcast signal as an RF signal from TV broadcasting or cable broadcasting as an RF signal through the antenna, and outputs an image signal to control section 114a.

External devices 121, 122 and 123 are a game device, video recorder, and DVD recorder respectively, which are external devices for outputting images. The external devices are connected to external input terminals 117, 118 and 119 of television receiver 110a, and outputs image signals to control section 114a.

In Fig. 1, setting section 111a includes key input or remote control key input. Contents set by a viewer using the key input or remote control key input are inputted. Thus, setting of various times, setting of a period for measuring watching time of images inputted from external input terminals 117, 118 and 119 and RF terminal 120 (hereinafter, referred to as "watching time measuring period"), setting of watching-allowed time of images from a plurality of external devices 121, 122 and 123 and built-in tuner section 116, and setting of warning display after the watching-allowed time has passed. Moreover, a personal identification number for enabling change of the setting can be set, and stored in storage section 112a.

The personal identification number is necessary in a case of performing setting of various times and setting, change, and cancellation of the watching-allowed time. The setting of them cannot be changed or cancelled unless an inputted personal identification number corresponds to a value stored in storage section 112a. Thus, a watching-restricted person such as child cannot freely change or cancel the setting. Only a setter of watching restriction, who set the personal identification number, can change or cancel the setting.

Storage section 112a includes a nonvolatile memory. The watching time measurement period set by setting section 111a, watching-allowed time for each image inputted into television receiver 110a, warning display after the watahing-allowed time has passed, the personal identification number and the like are stored in storage section 112a. Furthermore, when the watching-allowed time is stored in storage section 112a, data of the watching-allowed time are converted in timer unit, for example, by the second, so that the watching-allowed time can be compared with watching time measured by measurement section 113a.

Measurement section 113a includes a controllable microcomputer. Current time is continuously measured based on time set by setting section 111a. Moreover, the measurement section measures watching time in which image signals are inputted from the plurality of external devices 121, 122 and 123 and built-in tuner section 116 of television receiver 110a, and images are displayed in display section 115.

Control section 114a includes a controllable microcomputer. Image signals and sound signals outputted from the plurality of external devices 121, 122 and 123 and built-in tuner section 116 are inputted into control section 114a. Control section 114a allows measurement section 113a to measure watching time of each image, or performs control for starting and stopping image output based on the contents of watching setting directly inputted into setting section 111a, or the contents of setting previously stored in storage section 112a.

Moreover, control section 114a starts control of outputting an image selected by setting section 111a to display section 115, and provides an instruction signal to start measurement of watching time to measurement section 113a. Then, the control section reads watching time of an image signal from an image input terminal, which is measured by measurement section 113a, and then allows storage section 112a to store the watching time for each of image signals to be inputted from the image input terminals. Furthermore, control section 114a continuously compares the watching time read form measurement section 113a to the watching-allowed time stored in storage section 112a, so that whether the watching time passes over the watching-allowed time or not is confirmed. A selected image is outputted to display section 115 until the watching time passes over the watching-allowed time.

Then, when the watching time passes over the watching-allowed time during the watching time measurement period, control section 114a displays the contents of a warning after the watching-allowed time has passed, which is stored in storage section 113a, in display section 115, and then performs watching restriction by stopping an image signal display section 115.

Image signals from external devices 121, 122 and 123 or tuner section 116 are inputted into display section 115 via control section 114a. Display section 115 displays images of the image signals, or displays a warning outputted from control section 114a when watching time passes.

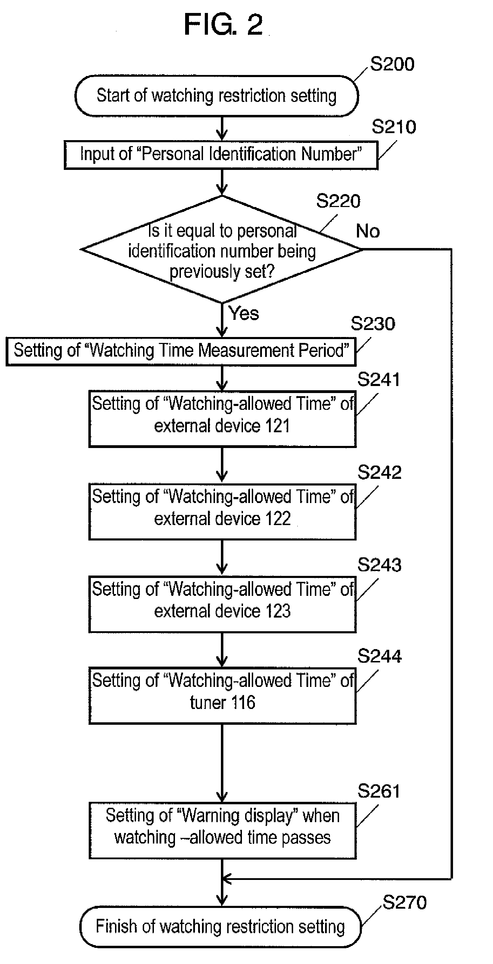

Fig. 2 is a flowchart of setting of watching restriction of the television receiver of the embodiment 1 of the invention. The setting of watching restriction in the embodiment 1 is described using Fig. 2.

For example, it is supposed that the game device, video recorder, and DVD recorder as external devices 121, 122 and 123 respectively are connected to the television receiver of the invention as shown in Fig. 1, and a setter of watching restriction starts setting of watching restriction (S200). First, a "personal identification number" is inputted (S210), and if the personal identification number is correctly authenticated, setting of watching restriction can be performed (S220). If a person other than the setter of watching restriction inputs a wrong personal identification number to perform setting of watching restriction, a step is shifted from authentication of a personal identification number (S220) to finish of setting of watching restriction (S270).

Next, the "watching time measurement period" is set to be 24 hours from 0:00 to 24:00 (S230). In setting of "watching-allowed time" of external devices 121, 122 and 123 and tuner section 116, the watching-allowed time is set to be 1 hour for external device 121 being the game device (S241), 1 hour for external device 122 being the video recorder (S242), 2 hours for external device 123 being the DVD recorder (S243), and 2 hours for tuner section 116 (S244), consequently watching-allowed time of all images to be inputted is set. Then, in setting of "warning display" when the watching-allowed time passes, the contents of warning display are set as "Watching-allowed time has passed. If you continue watching, please input your personal identification number", and time from the warning display to stopping image output is set to be 5 min (S261). Setting of watching restriction is finished by setting them (S270).

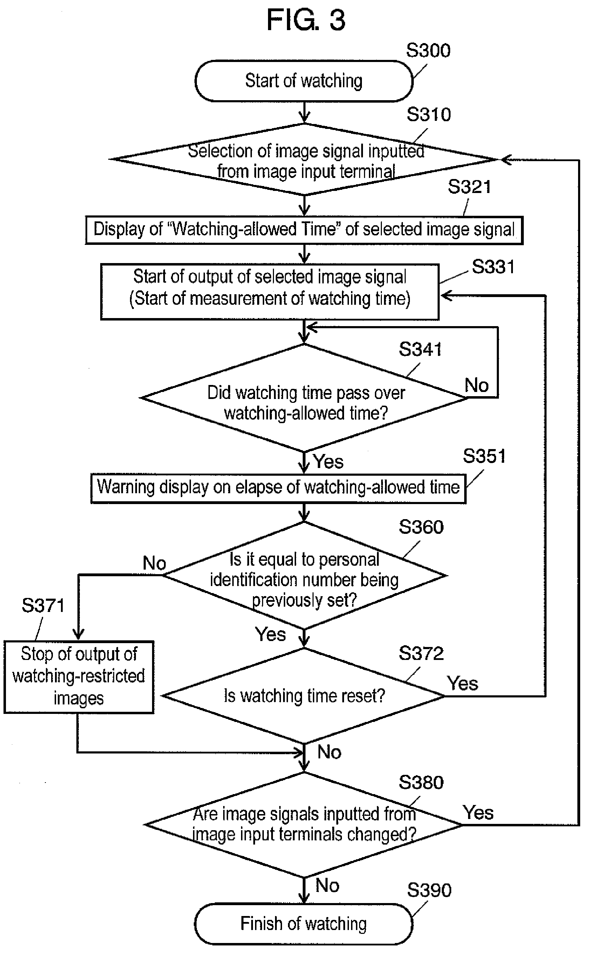

Fig. 3 is a flowchart on watching of the television receiver of the embodiment 1 of the invention. An aspect on the watching in the embodiment 1 is described using Fig. 3.

For example, it is supposed that when the setting of watching restriction of the flowchart of Fig. 2 is made, a child starts watching of external device 121 being the game device (S300). First, in selection of an image signal inputted from an image input terminal, external device 121 being the game device is selected (S310). Then, as display of the "watching-allowed time" of external device 121, "Watching-allowed time of external device 121 is 1 hour" is shown in display section 115 (S321), and image output from external device 121 and measurement of watching time are started (S331). Then, control section 114a compares watching time measure by measurement section 113a to watching-allowed time stored in storage section 112a until the watching time passes over the watching-allowed time (S341).

When the watching time of external device 121 passes over the watching-allowed of 1 hour time in the watching time measurement period, control section 114a performs warning display on elapse of watching-allowed time (S351), and authenticates a personal identification number (S360). Here, in the case that the personal identification number is not inputted, or the personal identification number is not correct, when 5 minutes passes from starting the warning display, control section 114a stops output of watching-restricted images (S371), and a step is shifted to a step of selecting continuous watching by changing an image signal to be inputted (S380). When a setter of watching restriction inputs a correct personal identification number, whether the watching time is reset is confirmed (S372). When the watching time is reset, a step is returned to start of output of a selected image (S331). When the watching time is not reset, a step is shifted to the step of selecting continuous watching by changing an image signal to be inputted from the image input terminal (S380).

When a step is shifted to the step of selection of continuous watching by changing an image signal to be inputted (S380), since image output from external device 121 is stopped by control section 114a, watching of external device 121 cannot be performed until the watching time measurement period (24 hours) passes. Accordingly, return to the step of selection of an image signal (S310), or shift to a step of finish of watching (S390) is selected.

When the step is returned to selection of an image signal to be inputted, another image signal connected to the television receiver, for example, an image signal inputted into television receiver 110a from one of external device 122 being the video recorder, external device 123 being the DVD recorder, and built-in tuner 116 (S310) is selected. Similarly as in a case of external device 121, when watching time passes over watching-allowed time, the selected image signal is stopped by control section 114a, so that watching cannot be performed.

When watching time of all image signals passes over the watching-allowed time, control section 114a stops all the image signals, so that watching is finished (S390). At 24:00 being the finished time of the watching time measurement period, watching time for each image signal to be inputted is reset, and watching can be started again.

According to such a configuration, in the case that the television receiver is connected with a plurality of external devices, not only a period of watching time of one external device is controlled, but also a plurality of periods of watching time are controlled every image signals inputted from a plurality of image input terminals, consequently TV watching time of children can be decreased.

While control section 114 and storage section 112 were separated components in the embodiment of the invention, the storage section may be a part of the control section.

While external devices 121, 122 and 123 were the game device, video recorder, and DVD recorder respectively in the embodiment 1 of the invention, all the external devices may be game devices. That is, it is enough that external devices connected to the television receiver of the invention are devices outputting image signals.

Moreover, while watching time was time in which image signals are inputted and displayed as images in the display section in the embodiment 1 of the invention, the watching time may be time in which sound signals are inputted. In such a case, watching time of sound signals being set to be inputted is measured by measurement section 113a, and when the watching time passes over watching-allowed time, control section 114a stops output of image signals to the display section.

Furthermore, while watching time control of images outputted from three external devices and one built-in tuner was performed in the embodiment 1 of the invention, the number of external devices may be 1, 2, or 4 or more. Moreover, the built-in tuner may include a plurality of tuners such as terrestrial analog tuner section 141 and terrestrial digital tuner section 142 connected to terrestrial broadcasting antenna 132, and BS broadcasting analog tuner section 143 and BS broadcasting digital tuner section 144 connected to BS broadcasting antenna 133. That is, images outputted from a plurality of image devices including at least one external device and at least one built-in tuner may be subjected to watching time control. In this case, image signals from the external input devices connected to image input terminals can be obviously subjected to watching time control for each of the external input devices, in addition, image signals outputted from the built-in tuners can be subjected to watching time control for each of the tuners.

While watching time control of images inputted into television receiver 110a from a plurality of devices including the external devices and the built-in tuner was performed in the embodiment 1 of the invention, watching time control using at least two external devices, or at least two built-in tuners may be performed.

While watching-allowed time was set to be inputted by setting section 111a in the embodiment 1 of the invention, it may be initially set to be inputted in the storage section. For example, watching-allowed time is initially set for each of devices as follows: watching-allowed time of images from the external devices being the game device and video recorder is 1 hour respectively, watching-allowed time of an image from the external device being the DVD recorder is 2 hours, and watching-allowed time of an image from the built-in tuner is 4 hours.

Furthermore, while setting of watching restriction can be changed by authentication of the personal identification number in the embodiment 1 of the invention, it may be changed by authentication by password input, for example, input of a password signal by pressing a plurality of remote control keys at the same time, input of a transmission signal using a password remote controller, or opening and closing of locking using a password key.

While the warning display was given using an image screen of the television receiver in a combined manner in the embodiment 1 of the invention, a screen for warning display may be newly provided.

While image output was stopped for watching restriction after watching time has passed over watching-allowed time in the embodiment 1 of the invention, a relaxation image and music may be outputted, which are previously stored in the storage section. In this case, there are advantages that eyes are simply rested by stopping TV watching, in addition, eyes that have stared at a TV screen are gradually relaxed, and feeling is also relaxed by music.

### Embodiment 2

In embodiment 2, an embodiment of a television receiver is described, in which when a television receiver is connected with a number of image signals at external input terminals, total watching time as the total sum of watching time of all images can be controlled.

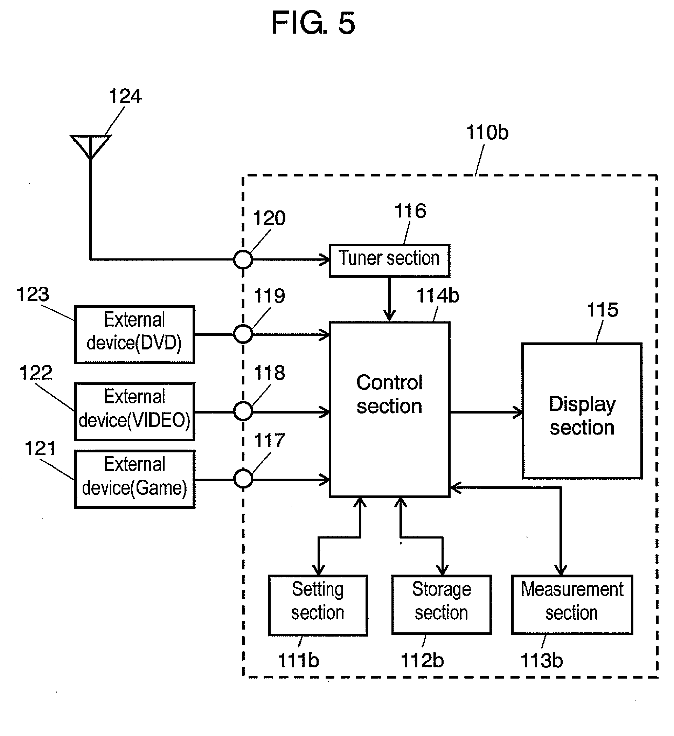

Fig. 5 shows a block diagram of a television receiver in the embodiment 2 of the invention. In Fig. 5, television receiver 110b includes setting section 111b, storage section 112b, measurement section 113b, control section 114b, display section 115, tuner section 116, external input terminals 117, 118 and 119, and RF terminal 120. External input terminals 117, 118 and 119 are connected with external devices 121, 122 and 123 respectively. RF terminal 120 is connected with antenna 124.

In television receiver 110b of Fig. 5, a component added with a function with respect to the relevant component of television receiver 110a of Fig. 1 has the same reference numeral, but has a different alphabet after the numeral, which is changed from a to b. A function added to components of television receiver 110b is described. Since functions other than the added function are the same as those of components in the embodiment 1, description of them is omitted.

In Fig. 5, setting section 111b is added with a step of inputting setting of total watching-allowed time. Storage section 112b stores the total watching-allowed time inputted by setting section 111b. Measurement section 113b measures the total watching time of all images to be inputted. Control section 114b compares the total watching-allowed time stored in storage section 112b to the total watching time measured by measurement section 113b, and when the total watching time passes through the total watching-allowed time, the control section performs warning display on elapse of the total watching-allowed time in display section 115.

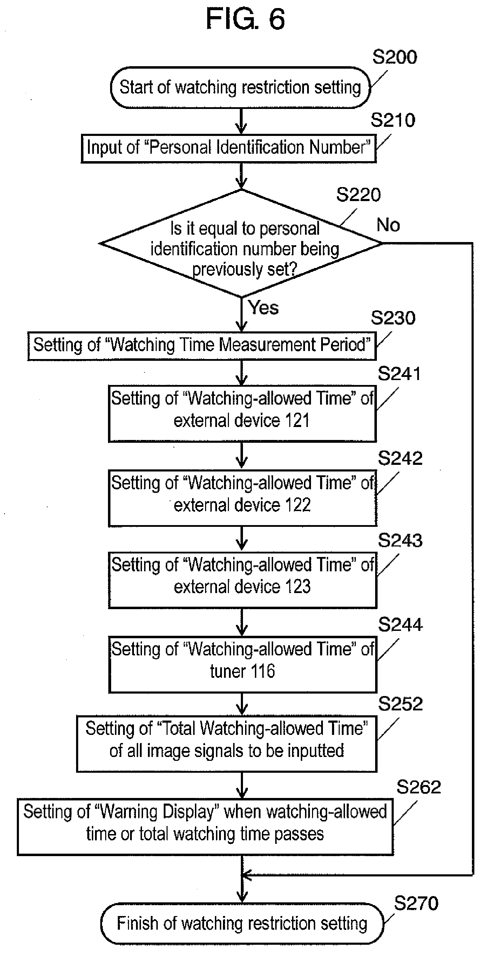

Fig. 6 is a flowchart of setting of watching restriction of the television receiver of the embodiment 2 of the invention. The setting of watching restriction in the embodiment 2 is described using Fig. 6.

For example, it is supposed that the game device, video recorder, and DVD recorder as external devices 121, 122 and 123 respectively are connected to the television receiver of the invention as shown in Fig. 5, and a setter of watching restriction starts setting of watching restriction (S200). First, a "personal identification number" is inputted (S210), and if the personal identification number is correctly authenticated, setting of watching restriction can be performed (S220). If a person other than the setter of watching restriction inputs a wrong personal identification number to perform setting of watching restriction, a step is shifted from authentication of a personal identification number (S220) to finish of setting of watching restriction (S270).

Next, the "watching time measurement period" is set to be 24 hours from 0:00 to 24:00 (S230). In setting of "watching-allowed time" of external devices 121, 122 and 123 and tuner section 116, the watching-allowed time is set to be 1 hour for external device 121 being the game device (S241), 1 hour for external device 122 being the video recorder (S242), 2 hours for external device 123 being the DVD recorder (S243), and 2 hours for tuner section 116 (S244), consequently watching-allowed time of all images to be inputted from image input terminals is set. Moreover, the total watching-allowed time is set to be 4 hours for all images inputted into television receiver 110b from external devices 121, 122 and 123 and tuner section 116 (S252). Then, in setting of "warning display" when the watching-allowed time or the total watching time passes, the contents of warning display are set as "Watching-allowed time has passed. If you continue watching, please input your personal identification number", or "The total watching-allowed time has passed. If you continue watching, please input your personal identification number", and time from the warning display to stop of image output is set as 5 min (S262). Setting of watching restriction is finished by setting them (S270).

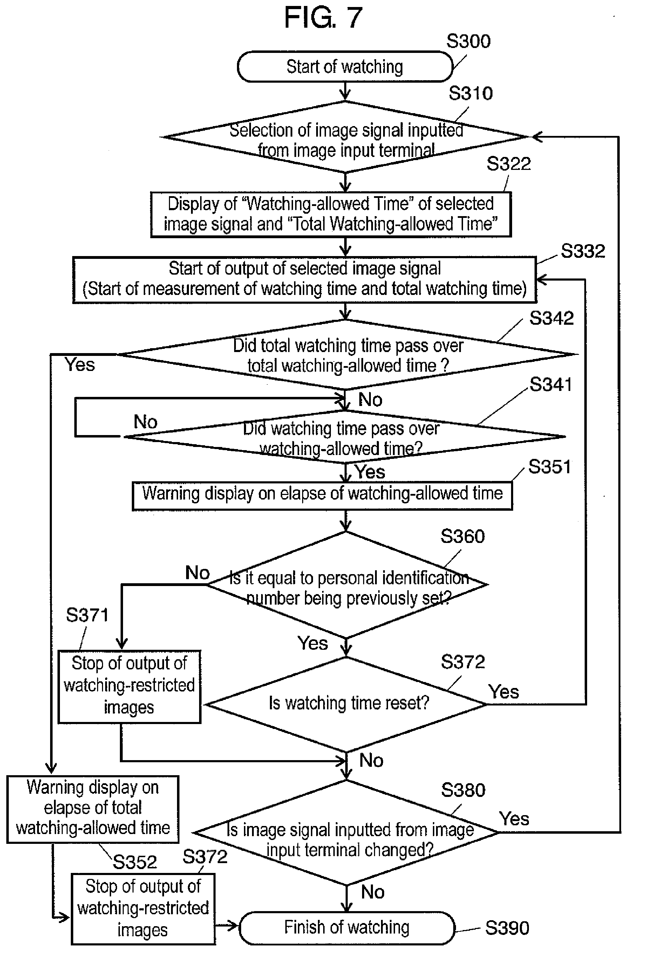

Fig. 7 is a flowchart on watching of the television receiver of the embodiment 2 of the invention. An aspect on the watching in the embodiment 2 is described using Fig. 7.

For example, it is supposed that when the setting of watching restriction of the flowchart of Fig. 6 is made, a child starts watching of external device 121 being the game device (S300). First, in selection of an image signal inputted from an image input terminal, external device 121 being the game device is selected (S310). Then, as display of the "watching-allowed time" and "total watching-allowed time" of external device 121, "Watching-allowed time of external device 121 is 1 hour" and "Total watching-allowed time is 4 hours" are shown respectively in display section 115 (S322), and image output from external device 121, and measurement of watching time and total watching time are started (S332). Then, control section 114b compares watching time and the total watching time measured by measurement section 113b to watching-allowed time and the total watching-allowed time stored in storage section 112b until the watching time passes over the watching-allowed time (S341), or the total watching time passes over the total watching-allowed time (S342).

When the watching time of external device 121 passes over the watching-allowed time of 1 hour in the watching time measurement period, control section 114b performs warning display on elapse of the watching-allowed time (S351), and authenticates a personal identification number (S360).

Here, in the case that the personal identification number is not inputted, or the personal identification number is not correct, when 5 minutes pass from starting the warning display, control section 114b stops output of watching-restricted images (S371), and a step is shifted to selection of continuous watching by changing an image signal to be inputted (S380). When a setter of watching restriction inputs a correct personal identification number, whether the watching time is reset is confirmed (S372). When the watching time is reset, a step is returned to start of output of a selected image (S332). When the watching time is not reset, a step is shifted to the step of selection of continuous watching by changing an image signal to be inputted from an external input terminal (S380).

When a step is shifted to the step of selection of continuous watching by changing an image signal to be inputted (S380), since image output from external device 121 is stopped by control section 114b, watching of external device 121 cannot be performed until the watching time measurement period (24 hours) passes. Accordingly, either return to the step of selection of an image signal to be inputted (S310), or shift to a step of finish of watching (S390) is selected.

When the step is returned to the step of selection of an image signal to be inputted, another image signal connected to the television receiver, for example, an image signal inputted into television receiver 110b from one of external device 122 being the video recorder, external device 123 being the DVD recorder, and built-in tuner 116 (S310) is selected. Similarly as in a case of external device 121, when watching time passes over the watching-allowed time, the selected image signal is stopped by control section 114b, consequently watching cannot be performed.

Furthermore, when a plurality of images to be inputted are watched, and thus the total watching time passes over the total watching-allowed time (S342), "Total watching-allowed time has passed. If you continue watching, please input your personal identification number" is shown in warning display on elapse of the total watching-allowed time (S352). In this case, control section 114b stops output of all images to be inputted (S372), so that all images to be inputted cannot be watched until the watching time measurement period (24 hours) passes (S390).

According to such a configuration, watching time of one external device is controlled, in addition, watching time is controlled for each of image signals inputted from image input terminals, and furthermore, the total watching time is controlled for all image signals to be inputted, consequently TV watching time of children can be decreased.

While the total watching time was measured by measurement section 113b in the embodiment 2 of the invention, watching time for each of image signals to be inputted, which was measured by the measurement section, may be integrated by control section 114b. In that case, measurement section 113b measures watching time for each of the image signals to be inputted, and control section 114b reads watching time from measurement section 113b, and allows storage section 112b to store the watching time for each of the image signals to be inputted. Then, control section 114b integrates the watching time for each of the image signals to be inputted, which has been stored in the storage section, into the total watching time, and confirms whether the total watching time has passed over the total watching-allowed time previously stored in storage section 112b. When the total watching time passes over the total watching-allowed time, all the image signals to be inputted from the image input terminals are stopped.

### Embodiment 3

As one reason for failure of eyesight of children due to TV watching, continuous TV watching is given. Thus, an embodiment of a television receiver is described in embodiment 3, wherein continuous watching time in which a television is continuously watched can be controlled.

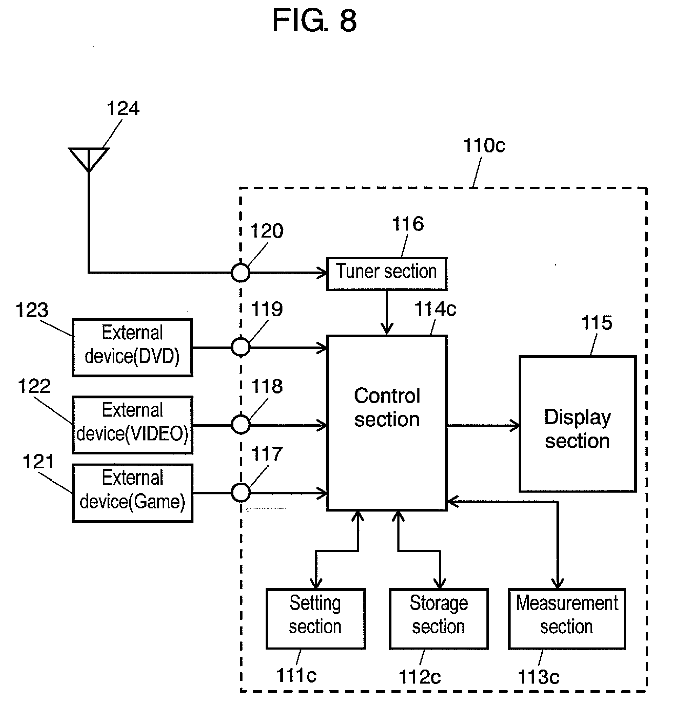

Fig. 8 shows a block diagram of a television receiver in the embodiment 3 of the invention. In Fig. 8, television receiver 110c includes setting section 111c, storage section 112c, measurement section 113c, control section 114c, display section 115, tuner section 116, external input terminals 117, 118 and 119, and RF terminal 120. External input terminals 117, 118 and 119 are connected with external devices 121, 122 and 123 respectively. RF terminal 120 is connected with antenna 124.

In television receiver 110c of Fig. 8, a component added with a function with respect to the relevant component of the television receiver 110a of Fig. 1 has the same reference numeral, but has a different alphabet after the numeral, which is changed from a to c. A function added to components of television receiver 110c is described. Since functions other than the added function are the same as those of components in the embodiment 1, description of them is omitted.

In Fig. 8, setting section 111c is added with a step of inputting setting of continuous watahing-allowed time in which inputted images can be continuously watched, and watching suspension time in which inputted image signals are suspended. Storage section 112c stores the continuous watching-allowed time and the watching suspension time set by setting section 111c. Measurement section 113c measures continuous watching time and watching suspension time of all images to be inputted. Control section 114c compares the continuous watching-allowed time stored in storage section 112c to the continuous watching time measured by measurement section 113c, and when the continuous watching time passes over the continuous watching-allowed time, the control section performs warning display on elapse of the continuous watching-allowed time in display section 115. Then, the control section restarts watching after the watching suspension time has passed since the watching control suspended watching.

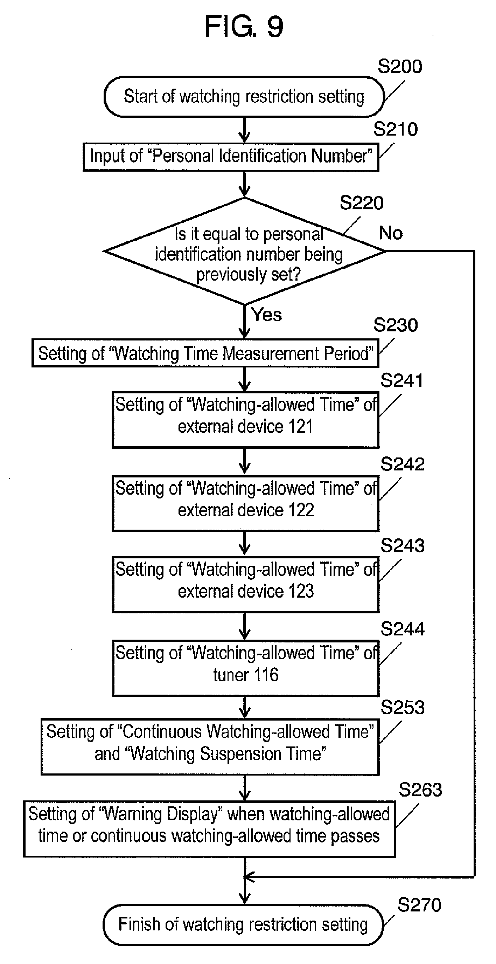

Fig. 9 is a flowchart of setting of watching restriction of the television receiver of the embodiment 3 of the invention. The setting of watching restriction in the embodiment 3 is described using Fig. 9.

For example, it is supposed that the game device, video recorder, and DVD recorder as external devices 121, 122 and 123 respectively are connected to the television receiver of the invention as shown in Fig. 8, and a setter of watching restriction starts setting of watching restriction (S200). First, a "personal identification number" is inputted (S210), and if the personal identification number is correctly authenticated, setting of watching restriction can be performed (S220). If a person other than the setter of watching restriction inputs a wrong personal identification number to perform setting of watching restriction, a step is shifted from authentication of a personal identification number (S220) to finish of setting of watching restriction (S270).

Next, the "watching time measurement period" is set to be 24 hours from 0:00 to 24:04 (S230). In setting of "watching-allowed time" of external devices 121, 122 and 123 and tuner section 116, the watching-allowed time is set to be 1 hour for external device 121 being the game device (S241), 1 hour for external device 122 being the video recorder (S242), 2 hours for external device 123 being the DVD recorder (S243), and 2 hours for tuner section 116 (S244), consequently watching-allowed time of all images to be inputted is set. Moreover, the continuous watching-allowed time is set to be 30 min, in which images can be continuously watched, for all images inputted from external devices 121, 122 and 123 and tuner section 116, and watching suspension time after continuous watching time has passed is set to be 10 min (S253). Then, in setting of "warning display" when the watching-allowed time or the continuous watching-allowed time passes, the contents of warning display are set as "Watching-allowed time has passed. If you continue watching, please input your personal identification number", or "Continuous watching-allowed time has passed. If you continue watching, please input your personal identification number", and time from the warning display to stop of image output is set to be 5 min (S263). Setting of watching restriction is finished by setting them (S270).

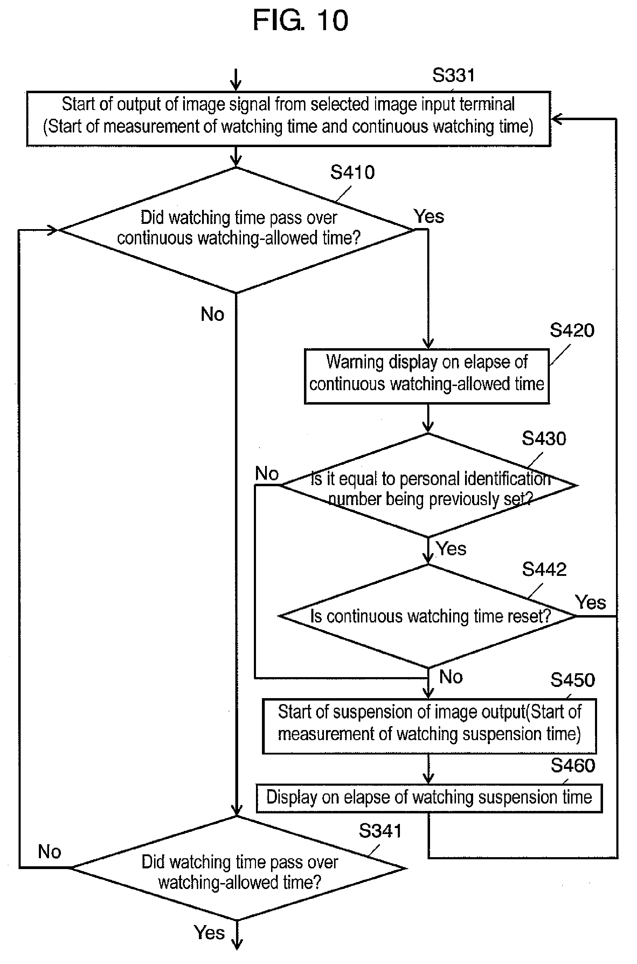

An aspect on watching of the television receiver in the embodiment 3 of the invention includes control of continuous watching time added between the step of starting output of a selected image signal (S331) and the step of comparison with respect to watching-allowed time (S341) in Fig. 3 being the flowchart of the embodiment 1 of the invention. Therefore, portions identical to those in the embodiment 1 are omitted to be described. A flowchart of watching of the television receiver of the embodiment 3 corresponds to Fig. 3 being the flowchart of the embodiment 1 which is added with Fig. 10 being a flowchart showing the continuous watching time control.

Hereinafter, an aspect on watching in the embodiment 3 is described using Fig. 3 and Fig. 10.

For example, it is supposed that when the setting of watching restriction of the flowchart of Fig. 9 is made, a child starts watching of external device 121 being the game device (S300). First, in selection of an image signal inputted from an image input terminal, external device 121 being the game device is selected (S310). Then, as display of the "watching-allowed time" and "continuous watching-allowed time" of external device 121, "Watching-allowed time of external device 121 is 1 hour" and "Continuous watching-allowed time is 30 min" are displayed in display section 115 respectively (S321), and image output of external device 121, and measurement of watching time and continuous watching time are started (S331 in Fig. 10). Then, control section 114c compares continuous watching time measured by measurement section 113c to continuous watching-allowed time stored in storage section 112c (S410). When the continuous watching time does not pass over the continuous watching-allowed time, control section 114c further compares watching time measured by measurement section 113c to watching-allowed time stored in storage section 112c (S341). Then, when the watching time does not pass over the watching-allowed time, a step is returned to a step of comparison with respect to the continuous watching time (S410). Comparison with respect to the watching-allowed time is repeated until the continuous watching time passes over the continuous watching-allowed time, or the watching time passes over the watching-allowed time (S410, S341).

When the continuous watching time passes over the continuous watching-allowed time of 30 min, a step is shifted from the step of comparison with respect to the continuous watching time (S410) to control of the continuous watching time. First, control section 114c performs warning display on elapse of the continuous watching-allowed time (S420), and authenticates a personal identification number (S430). Here, in the case that the personal identification number is not inputted, or the personal identification number is not correct, when 5 minutes passes from starting the warning display, control section 114c starts suspension of image output (S450). When a setter of watching restriction inputs a correct personal identification number, whether the continuous watching time is reset is confirmed (S442). When continuous watching time is reset, a step is returned to start of output of a selected image (S331). When the continuous watching time is not reset, a step is shifted to the step of starting suspension of image output (S450).

When suspension of image output is started (S450), since control section 114c stops image output from external device 121, watching of external device 121 cannot be performed until the watching suspension time of 10 min passes. When the watching suspension time of 10 min passes, a fact of elapse of the watching suspension time is displayed (S460).

After a step is returned from the step of displaying a fact of elapse of the watching suspension time (S460) to the step of starting output of a selected image (S331), when the continuous watching time passes over the continuous watahing-allowed time of 30 min, a flow from warning display on elapse of the continuous watching-allowed time (S420) to display on elapse of the watching suspension time (S460) is repeated.

When the watching time of external device 121 passes over the watching-allowed time of 1 hour, a step is shifted to a step of warning display on elapse of watching-allowed time (S351) in Fig. 3. Then, control section 114c performs warning display on elapse of the watching-allowed time (S351), and authenticates a personal identification number (S360).

Here, in the case that the personal identification number is not inputted, or the personal identification number is not correct, control section 114c stops image output and thus performs watching restriction (S371), and a step is shifted to a step of selection of continuous watching by changing an image signal to be inputted (S380). When a setter of watching restriction inputs a correct personal identification number, whether the total watching time is reset is confirmed (S372). When the watching time is reset, a step is returned to start of output of a selected image (S331). When the watching time is not reset, a step is shifted to the step of selection of continuous watching by changing an image signal to be inputted (S380).

When a step is shifted to the step of selection of continuous watching by changing an image signal to be inputted (S380), since image output from external device 121 is stopped by control section 114c, watching of external device 121 cannot be performed until the watching time measurement period (24 hours) passes. Accordingly, either return to the step of selection of an image signal to be inputted (S310), or shift to finish of watching (S390) is selected.

When the step is returned to the step of selection of an image signal to be inputted (S310), another image signal connected to the television receiver, for example, an image signal outputted from one of external device 122 being the video recorder, external device 123 being the DVD recorder, and built-in tuner 116 (S310) is selected. Similarly as in a case of external device 121, when watching time passes over the watching-allowed time, or when continuous watching time passes over the watching-allowed time, the selected image signal is stopped by control section 114c, consequently watching cannot be performed.

When watching time of all image signals to be inputted passes over the watching-allowed time, control section 114c stops all the image signals to be inputted, so that watching is finished (S390). At 24:00 being the finished time of the watching time measurement period, watching time for each of image signals to be inputted is reset, and watching can be started again.

According to such a configuration, watching time of the external devices is controlled, in addition, continuous watching time is controlled, consequently continuous TV watching time of children can be decreased.

While the flowchart on watching of the television receiver in the embodiment 3 of the invention corresponds to Fig. 3 being the flowchart of the embodiment 1, which is added with Fig. 10 being the flowchart showing the continuous watching time control, it may correspond to Fig. 7 being the flowchart of the embodiment 2 of the invention, which is added with Fig. 10 showing the continuous watching time control. In this case, three kinds of watching time control are performed, including watching time control for each of image signals inputted from the image input terminals, the total watching time control for all image signals to be inputted, and continuous watching time control.

### INDUSTRIAL APPLICABILITY

In the case that a plurality of external devices such as a game device, video recorder, and DVD recorder are connected to external input terminals, the television receiver according to the invention controls watching time of the game device, in addition, controls watching time of the video recorder, DVD recorder, or a tuner. Accordingly, continuous TV watching of children by changing a plurality of images can be controlled, and thus TV watching time of the children can be decreased, consequently the television receiver of the invention is useful for a television receiver and the like in which watching time is restricted.

## Claims

1. A television receiver which is inputted with image signals from a plurality of image input terminals, comprising:
a measurement section for measuring watching time in which the image signals are displayed as images, and
a control section for stopping output of the image signals when the watching time read from the measurement section passes over watching-allowed time being previously stored.

2. The television receiver of claim 1:
wherein the measurement section measures the watching time in which the image signals are displayed as images for each of the image signals from the plurality of image input terminals, and
the control section compares watching-allowed time set for each of the image signals to the watching time measured by the measurement section, and stops output of the image signals when the watching time passes over the watching-allowed time.

3. The television receiver of claim 1:
wherein the control section stops output of the image signals when the watching time measured by the measurement section passes over the watching-allowed time, and
outputs a warning signal for displaying a warning on elapse of the watching-allowed time.

4. The television receiver of claim 1, further comprising:
a setting section for setting the watching-allowed time.

5. The television receiver of claim 4:
wherein the setting section performs authentication for permitting change of setting by inputting a predetermined password.

6. The television receiver of claim 2:
wherein the image signals from the plurality of image input terminals include image signals outputted from a tuner section via an RF terminal, and image signals inputted from external input terminals.

7. The television receiver of claim 2:
wherein the image signals from the plurality of image input terminals include image signals outputted from a terrestrial broadcasting tuner section via an RF terminal, and image signals outputted from a BS broadcasting tuner section.

8. The television receiver of claim 2:
wherein the image signals from the plurality of image input terminals include image signals outputted from a digital broadcasting tuner section via an RF terminal, and image signals outputted from an analog broadcasting tuner section.

9. The television receiver of claim 1:
wherein the measurement section measures total watching time being the sum total of watching time of all the plurality of image signals, and
the control section compares the total watching time measured by the measurement section to total watching-allowed time being previously stored, and stops output of the image signals when the total watching time passes over the total watching-allowed time.

10. The television receiver of claim 1:
wherein the measurement section measures continuous watching time in which the image signals are continuously displayed as images, in addition, measures watching suspension time in which image display of the image signals are suspended, and,
the control section resets the continuous watching time when the watching suspension time measured by the measurement section exceeds a predetermined time.

## Amended claims

### Amended claims under Art. 19.1 PCT

**1.** (amended) A television receiver which is inputted with image signals from a plurality of image input terminals, comprising:
a measurement section for measuring watching time, in which the image signals are displayed as images, for each of the image signals from the plurality of image input terminals, and
a control section for stopping output of the image signals when the watching time for each of the image signals from the plurality of image input terminals, which is read from the measurement section, passes over watching-allowed time being previously stored, which is set for each of the image signals.

**2.** (cancelled)

**3.** The television receiver of claim 1:
wherein the control section stops output of the image signals when the watching time measured by the measurement section passes over the watching-allowed time, and
outputs a warning signal for displaying a warning on elapse of the watching-allowed time.

**4.** The television receiver of claim 1, further comprising:
a setting section for setting the watching-allowed time.

**5.** The television receiver of claim 4:
wherein the setting section performs authentication for permitting change of setting by inputting a predetermined password.

**6.** (amended) The television receiver of claim 1:
wherein the image signals from the plurality of image input terminals include image signals outputted from a tuner section via an RF terminal, and image signals inputted from external input terminals.

**7.** (amended) The television receiver of claim 1:
wherein the image signals from the plurality of image input terminals include image signals outputted from a terrestrial broadcasting tuner section via an RF terminal, and image signals outputted from a BS broadcasting tuner section.

**8.** (amended) The television receiver of claim 1:
wherein the image signals from the plurality of image input terminals include image signals outputted from a digital broadcasting tuner section via an RF terminal, and image signals outputted from an analog broadcasting tuner section.

**9.** (amended) The television receiver of claim 1:
wherein the control section compares integrated time of the watching time for each of the image signals measured by the measurement section to the watching-allowed time, and stops output of the image signals when the integrated time passes over the watching-allowed time.

**10.** The television receiver of claim 1:
wherein the measurement section measures continuous watching time in which the image signals are continuously displayed as images, in addition, measures watching suspension time in which image display of the image signals are suspended, and,
the control section resets the continuous watching time when the watching suspension time measured by the measurement section exceeds a predetermined time.
